# EUROPÄISCHE PATENTSCHRIFT

(11) **EP 2 923 079 B1**
(45) Veröffentlichungstag und Bekanntmachung des Hinweises auf die Patenterteilung: **04.07.2018**
(21) Anmeldenummer: 13795167.9
(22) Anmeldetag: 21.11.2013
(51) Int. Cl.: F03D 7/02, F03D 1/06, F03D 13/20

(54) **VERFAHREN ZUM BETREIBEN EINER WINDENERGIEANLAGE UND WINDENERGIEANLAGE**
METHOD FOR OPERATING A WIND TURBINE AND WIND TURBINE
PROCÉDÉ POUR FAIRE FONCTIONNER UNE ÉOLIENNE ET ÉOLIENNE

(30) Priorität: 21.11.2012 DE 102012221289
(43) Veröffentlichungstag der Anmeldung: 30.09.2015
(73) Patentinhaber: Senvion GmbH, 22297 Hamburg (DE)
(72) Erfinder: EUSTERBARKEY, Carsten, 25813 Simonsberg (DE); SCHARLAUG, Nadine, 20547 Hamburg (DE)
(74) Vertreter: Wallinger Ricker Schlotter Tostmann
(86) Internationale Anmeldenummer: PCT/EP2013/003509
(87) Internationale Veröffentlichungsnummer: WO 2014/079571

(56) Entgegenhaltungen:
- EP-A2- 2 343 453
- WO-A1-01/71183
- WO-A1-02/42641
- DE-A1-102007 045 437

## Beschreibung

Die Erfindung betrifft ein Verfahren zum Betreiben einer Windenergieanlage mit einer drehbar auf einem Turm angeordneten Maschinengondel und einem Rotor mit drei Rotorblättern, von denen wenigstens zwei um eine Rotorblattlängsachse schwenkbar sind, wobei die Windenergieanlage nach einem Stillsetzungsbefehl in eine Stillstandsposition gebracht wird, sowie eine entsprechende Windenergieanlage.

In der vorliegenden Patentanmeldung werden Windenergieanlagen mit im Wesentlichen horizontaler Rotorachse behandelt. Das Stillsetzen einer solchen Windenergieanlage aus dem laufenden Betrieb kann verschiedene Gründe haben. So sind Wartungsarbeiten, Reparaturarbeiten oder Ähnliches nur bei stillgesetzter Windenergieanlage möglich. Besondere Anforderungen ergeben sich insbesondere bei Offshore-Windenergieanlagen, wenn diese mit einem Helikopter angeflogen werden, um Techniker zur Wartung oder zur Reparatur an der Windenergieanlage abzusetzen. Der Anflug einer Windenergieanlage mit einem Helikopter ist besonderen Sicherheitsbestimmungen unterworfen und erfordert eine stillgesetzte Windenergieanlage, wobei auch die Rotorposition besonderen Ansprüchen genügen muss. So sollte der Rotor in dem stillgesetzten Zustand eine Position haben, bei der die Rotorblätter möglichst wenig in vertikaler Richtung über die Maschinengondel hinausragen, um den Anflug des Helikopters zu ermöglichen. Es ist beispielsweise erwünscht, dass der Rotor der Windenergieanlage sich beim Helikopteranflug nicht dreht, damit keine Änderungen in den Strömungsverhältnissen verursacht werden.

Aus DE 10 2010 000707 ist ein Verfahren zum Betreiben einer Windenergieanlage bekannt, bei dem eine Stillsetzungsvorrichtung für den Rotor vorgesehen ist, der den Rotor bremst oder arretiert, wobei außerdem die Stillstandsposition des Rotors jeweils von wenigstens zwei oder mehr unabhängig voneinander betriebenen oder betreibbaren Erfassungseinrichtungen unabhängig erfasst wird und die erfasste Stillstandsposition des Rotors verifiziert wird. Erst bei doppelt verifizierter Stillstandsposition wird der Anflug eines Helikopters erlaubt.

Aus WO 2004/111443 A1 ist es bekannt, eine Windenergieanlage stillzusetzen, wenn die Windenergieanlage von einem Hubschrauber angeflogen wird und den Stillstand drahtlos aus dem Helikopter heraus zu initiieren.

Zum Helikopteranflug gibt es weiterhin umfangreiche Sicherheits-Richtlinien, in denen gefordert wird, dass der Rotor ca. 90° aus dem Wind gedreht wird, also in eine Querausrichtung zum Wind gebracht wird, und dass der Rotor entweder in der so genannten "Y"-Stellung mit einem Blatt senkrecht nach unten arretiert wird, oder in einer Position mit einem horizontal in die Windrichtung zeigenden Rotorblatt. Dazu wird üblicherweise zunächst der Rotor festgebremst und dann die Maschinengondel aus dem Wind gedreht.

Das übliche Anfahren der gewünschten Rotorposition mittels Zielbremsung und/oder mit einer Positioniereinrichtung bzw. einem Positionierhilfsantrieb und Festbremsen des Rotors in der gewünschten Position führt vor allem bei starkem Wind zu hohen Belastungen auf dem Positionierantrieb und im festgebremsten Zustand auf das Bremssystem und bei Getriebeanlagen auf das Getriebe, da bei letzteren die Bremse üblicherweise auf der schnellen Getriebewelle angeordnet ist. Durch dieses Bremsen bzw. Arretieren können in der Getriebeverzahnung so genannte "Stillstandsmarkierungen" entstehen, die der Ausgangspunkt für spätere Verzahnungsschäden sein können.

WO 01/71183 A1 betrifft unter anderem eine Windenergieanlage mit drei pitchverstellbaren Rotorblättern. Es wird eine lastarme Ruheposition vorgestellt, in der Wind den Rotor von der Seite her anströmt. Ein Rotorblatt wird in eine Fahnenstellung (90°-Stellung) gefahren, die anderen beiden Rotorblätter, die eine Ruderfunktion übernehmen, verbleiben in einer 0°-Stellung, in der sie dem Wind wenig Angriffsfläche bieten. Da das Rotorblatt in der 90°-Stellung in den seitlich anströmenden Wind gerichtet ist, bietet es dem Wind ebenfalls wenig Angriffsfläche. Die Windenergieanlage kann in ihrem Azimutantrieb freigelassen werden oder bezüglich des Azimutwinkels der Windrichtung nachgeführt werden.

Der Erfindung liegt daher die Aufgabe zugrunde, das Anfahren und Halten einer vorbestimmten Rotorposition, insbesondere beim Helikopteranflug von Offshore-Windenergieanlagen, zu verbessern.

Diese Aufgabe wird gelöst durch ein Verfahren zum Betreiben einer Windenergieanlage mit einer drehbar auf einem Turm angeordneten Maschinengondel und einem Rotor mit drei Rotorblättern, von denen wenigstens zwei um eine Rotorblattlängsachse schwenkbar sind, wobei die Windenergieanlage nach einem Stillsetzungsbefehl in eine Stillstandsposition gebracht wird, das dadurch weitergebildet ist, dass zum Erreichen der Stillstandsposition die Maschinengondel in eine Azimutposition quer zur Windrichtung gedreht wird, ein Rotorblatt in einen Bereich einer Betriebsstellung gebracht oder in einem Bereich einer Betriebsstellung gehalten wird, die insbesondere im Wesentlichen einer Blattwinkeleinstellung in einem Teillastbereich unterhalb eines Volllastbereiches der Windenergieanlage entspricht, und zwei andere Rotorblätter jeweils in einen Bereich einer Fahnenstellung gebracht oder in einem Bereich einer Fahnenstellung gehalten werden, wobei der Rotor nach Erreichen der Stillstandsposition durch den quer zur Rotorachsrichtung, insbesondere seitwärts, anströmenden Wind stabilisiert wird.

Die Erfindung beruht auf dem Grundgedanken, dass eine geeignete Stillstandsposition des Rotors auch auf anderem Wege als durch mechanisches Positionieren und Festbremsen oder Arretieren erreicht werden kann, nämlich durch geeignete und gezielte Winkelverstellung der Rotorblätter des Rotors. Da in der Stillstandsposition die Gondel und auch der Rotor um 90° aus dem Wind gedreht sind, strömt der Wind den Rotor in einer unüblichen Art und Weise an, nämlich von der Seite. In diesem Fall wirken die Rotorblätter aerodynamisch deutlich anders als im üblichen Betrieb bei einer Anströmung von vorne. Die Maßnahme, zwei Rotorblätter in den Bereich einer Fahnenstellung zu bringen und ein Rotorblatt in einer Betriebsstellung zu lassen oder in diese hineinzubringen, bewirkt, dass die beiden im Bereich der Fahnenstellung eingestellten Rotorblätter dem Wind ihre Breitseite darbieten, so dass der Wind diese in die Windrichtung drückt.

Da die beiden Rotorblätter bei einem Dreiblattrotor um 120° auseinander sind, ergibt dies eine stabile Position, bei der eines der beiden Rotorblätter oberhalb einer horizontalen Linie durch die Rotorachse und das andere unterhalb dieser Linie angeordnet ist. Das dritte Rotorblatt, das im Bereich der Betriebsstellung eingestellt ist, zeigt dem seitwärts anströmenden Wind in jeder Position seine Schmalseite, so dass der Wind auf dieses eine Rotorblatt weniger Kraft ausübt. Dieses wird daher weniger Schub in Windrichtung erfahren und bleibt aufgrund der entstandenen Asymmetrie in der Kraftverteilung auf die drei Rotorblätter bezogen auf die Rotordrehachse in den Wind hinein ausgerichtet. Die so erreichte Stellung ist eine sehr lastarme Stellung, die sowohl bei schwachem Wind als auch bei starkem Wind eine stabile und trudelarme Positionierung des Rotor in einer für einen Helikopteranflug günstigen Positionierung ergibt.

Die erfindungsgemäße Position ist auch stabiler und daher bevorzugt gegenüber der nicht erfindungsgemäßen umgekehrten Konfiguration, in der nur ein Rotorblatt in der Fahnenstellung gehalten wird und zwei Rotorblätter in einer Betriebsposition gehalten werden. In dem Fall drückt der seitwärts anströmende Wind nur auf das eine in Fahnenstellung befindliche Rotorblatt, das sich in den abströmenden Wind legt bzw. orientiert. Die Kraft, die der Wind in dieser Position auf das einzelne Rotorblatt in Fahnenstellung ausübt, ist nicht wesentlich größer als die Kraft, die auf die beiden anderen Rotorblätter ausgeübt wird, die dem Wind ebenfalls die Schmalseite zeigen, jedoch unter einem 60°-Winkel dazu stehen. Diese Position ist wesentlich instabiler. Da zwei der Rotorblätter in Betriebsstellung stehen, ist die Konfiguration außerdem anfällig dafür, bei drehendem Wind zu einem erneuten Anlaufen des Rotors zu führen, wenn der Wind die Windenergieanlage mit einer Bewegungskomponente von vorn anströmt.

Dabei ist vorteilhafterweise der Bereich einer Betriebsstellung ein Bereich, bei dem Profilsehnen der äußeren 30% der Blattlänge des Rotorblatts im Wesentlichen, insbesondere innerhalb von etwa ±10°, in der Rotorebene liegen, wobei der Bereich der Fahnenstellung ein Bereich ist, bei dem Profilsehnen der äußeren 30% der Blattlänge des Rotorblatts im Wesentlichen, insbesondere innerhalb von etwa ±15°, senkrecht zur Rotorebene liegen. Die Winkelbereiche für den Bereich der Betriebsstellung und den Bereich der Fahnenstellung tragen dem Umstand Rechnung, dass einerseits die Rotorblätter in sich verwunden sind, auch in gewissen Grenzen innerhalb des Blattspitzenbereichs, so dass die Positionierung abhängig vom Rotorblatttyp ist. Andererseits ist auch dem Umstand Rechnung zu tragen, dass eine ideal funktionierende Fahnenstellung für den erfindungsgemäßen Zweck der Rotorpositionierung bei seitlicher Anströmung eine gewisse rotorblattindividuelle Variation um eine exakte Fahnenstellung herum erforderlich machen kann. Dies ist abhängig wiederum vom Rotorblatttyp und gegebenenfalls von einer Windgeschwindigkeit sowie der Seite, von der das Rotorblatt angeströmt wird.

Erfindungsgemäß wird unter der Fahnenstellung sowohl eine positive Fahnenstellung als auch eine negative Fahnenstellung verstanden. Die positive Fahnenstellung ist bei einem Luvläufer diejenige, bei der das Rotorblatt mit der Profilhinterkante zur Maschinengondel hin ausgerichtet ist, während die negative Fahnenstellung die Hinterkante von der Maschinengondel weg weisen lässt. Wenn die beiden im Bereich der Fahnenstellung gehaltenen Rotorblätter in der positiven Fahnenstellung gehalten sind, so wird ein Rotorblatt in der Stillstandsposition auf der Saugseite vom seitlich anströmenden Wind angeströmt, während das andere Rotorblatt auf seiner Druckseite angeströmt wird. Diese unterschiedlichen Profile haben wiederum eine Auswirkung darauf, dass der vom seitlich anströmenden Wind ausgeübte Druck auf die beiden Rotorblätter unterschiedlich ist. Hierzu kann wiederum eine begrenzte unterschiedliche Einstellung der Fahnenstellung oder die Auswahl einer positiven in Kombination mit einer negativen Fahnenstellung positive Ergebnisse zeigen und eine stabilere Stillstandsposition des Rotors fördern.

Die optimale Wahl von Stillstandspositionen bzw. Betriebsstellungen und Fahnenstellungen hängt vom Typ der Windenergieanlage und der Rotorblätter ab und kann einerseits durch rechnerische Simulationen und andererseits durch Tests an der installierten Windenergieanlage ermittelt werden. Ebenfalls kann auf diese Weise ermittelt werden, ob es günstiger ist, die Maschinengondel so zu positionieren, dass der Rotor von links oder von rechts seitlich, also quer zur Rotorachsrichtung, vom Wind angeströmt wird. Die bevorzugte Position kann aber auch vom eingesetzten Helikopter abhängen, deren Winsch zum Ablassen von Personen zumeist seitlich angeordnet ist.

Vorteilhafterweise ist vorgesehen, dass der Rotor nach Erreichen der Stillstandsposition für eine Zeitdauer, insbesondere die Dauer eines Helikopteranflugs, zusätzlich festgebremst und/oder arretiert wird. Dies kann besonders notwendig werden, wenn die Vorschriften für einen Helikopteranflug einen nicht fest gebremsten oder nicht arretierten Rotor verbieten. Durch die erfindungsgemäße aerodynamische Stabilisierung ist allerdings der Rotor in einer besonderen lastarmen Situation, so dass das Festbremsen bzw. Arretieren besonders lastarm geschieht und insbesondere Brems- oder Stillstandsmarkierungen nicht oder kaum mehr auftreten, so dass es auch nicht mehr zu Verzahnungsschäden kommt. Unter Festbremsen wird im Rahmen der vorliegenden Anmeldung ein kraftschlüssiges Festsetzen des Rotors verstanden, ein Arretieren ist ein formschlüssiges Festsetzen.

Vorzugsweise erfolgt eine Anpassung wenigstens eines Blattwinkels abhängig von einer gemessenen Rotorposition, wobei insbesondere die Anpassung nicht kontinuierlich erfolgt und nach Stabilisierung einer gewünschten Rotorposition die eingestellten angepassten Blattwinkel beibehalten werden. Die Anpassung kann notwendig sein, wenn beispielsweise das vertikale Strömungsprofil des seitlich anströmenden Windes nicht einem Standardprofil entspricht, so dass eine gewisse Anpassung der Blattwinkel, insbesondere der beiden in Fahnenstellung befindlichen Rotorblätter notwendig ist, um eine für einen Helikopteranflug günstige Rotorpositionierung zu erreichen. Sobald diese Positionierung erreicht ist, können die so angepassten Blattwinkel eingefroren bzw. beibehalten werden.

Die Maschinengondel wird vorzugsweise in eine vorbestimmte Drehrichtung verfahren, wobei insbesondere im Falle des Vorliegens eines Kabel-Twist-Signals in die zur vorbestimmten Richtung entgegengesetzte Richtung verfahren wird. Die Vorzugsrichtung kann beispielsweise bei Simulationen oder bei Tests an der installierten Windenergieanlage festgestellt worden sein, wobei festgestellt wurde, dass der Rotor in der Stillstandsposition besonders stabil aerodynamisch unterstützt wird, wenn er von links oder von rechts angeströmt wird. Dies kann dann die bevorzugte bzw. vorbestimmte Drehrichtung definieren. Das Vorliegen eines Kabel-Twist-Signals, bei dem die Kabel der Windenergieanlage, die sich üblicherweise bis zu etwa 720° verdrehen lassen, bei der entsprechenden Verdrehung zu weit verdreht werden würden, kann jedoch die Ausnahme bilden, bei der dann die Drehrichtung in die umgekehrte Richtung erfolgt. Dabei kann in der als etwas ungünstiger erkannten Maschinengondelposition angehalten werden, oder es kann, wenn mehr Zeit hierfür vorhanden ist, eine weitere Verdrehung bis in die als günstiger erkannte Maschinengondelpositionierung weitergefahren werden. Dies hat den weiteren Vorteil, dass der Kabel-Twist stärker entwunden wird. Je nach Helikoptertyp kann auch nur eine Richtung möglich sein, insbesondere bei seitlich montierter Winde bzw. Winsch fliegt der Helikopter bevorzugt nur von einer Seite an.

In einer bevorzugten Weiterbildung erfolgt zunächst die Drehung der Maschinengondel und die Änderung der Blattwinkel erst, wenn die Maschinengondel bereits im Wesentlichen, insbesondere um mehr als 60°, aus dem Wind gedreht ist. Dies hat den Vorteil, dass durch das Herausdrehen des Rotors aus dem Wind zunächst die Last auf den Rotor reduziert wird, bevor die Blattwinkel verstellt werden. Der Rotor wird hierzu zuvor in einen lastarmen Trudelzustand gebracht, bei dem vorzugsweise alle drei Blätter in Fahnenstellung sind.

Vorzugsweise wird eine Stillstandsposition des Rotors eingestellt, bei der eine Rotorposition vorherrscht, die im Wesentlichen zwischen einer "Y"-Position mit einem senkrecht nach unten weisenden Rotorblatt und einer demgegenüber gedrehten Position liegt, bei der das im Bereich einer Betriebsstellung gedrehte Rotorblatt waagerecht und zum Wind weisend ausgerichtet ist, wobei die eingenommene Rotorposition mit einer Abweichung von weniger als ±10°, insbesondere von weniger als ±5° eingehalten wird. Idealerweise erfolgt die Einstellung der Rotorposition ohne Abweichung innerhalb des genannten Bereichs zwischen der "Y"-Position mit senkrecht nach unten weisendem Rotorblatt und einer gedrehten Position mit horizontal in den Wind weisendem Rotorblatt. Bei einer aerodynamischen Stabilisierung ist aber aufgrund der Unbeständigkeit der Windverhältnisse mit einer leichten, insbesondere temporären, Abweichung aus diesem Bereich zu rechnen. Diese sollte möglichst gering gehalten werden. So kann vorteilhafterweise eine Positionierung zwischen den beiden genannten extremen Positionen gewählt werden, die besonders viel Spiel in beide Richtungen erlaubt, ohne den gewünschten Bereich zu verlassen. In dieser Mittelstellung befindet sich das im Bereich der Betriebsstellung gehaltene Rotorblatt in einem Winkel zur Horizontalen von etwa 15° oberhalb der Horizontalen.

Die der Erfindung zugrunde liegende Aufgabe wird auch durch eine Windenergieanlage mit einer drehbar auf einem Turm angeordneten Maschinengondel, einem Rotor mit drei Rotorblättern, von denen wenigstens zwei um eine Rotorblattlängsachse schwenkbar sind, einer, insbesondere eine Datenverarbeitungsanlage umfassende, Steuerungseinrichtung, einem Windrichtungssensor und einem Rotorpositionssensor, wobei die Steuerungseinrichtung ausgebildet ist, die Windenergieanlage nach einem Stillsetzungsbefehl in eine Stillstandsposition zu bringen, gelöst, die dadurch weitergebildet ist, dass die Steuerungseinrichtung nach Empfang des Stillsetzungsbefehls ausgebildet ist, die Maschinengondel, insbesondere mittels eines Azimutantriebs, in eine Azimutposition quer zur Windrichtung zu drehen, insbesondere mittels eines Blattwinkelverstellantriebs, ein Rotorblatt in einen Bereich einer Betriebsstellung zu bringen oder in einem Bereich einer Betriebsstellung zu halten und zwei andere Rotorblätter jeweils, insbesondere mittels Blattwinkelverstellantrieben, in einen Bereich einer Fahnenstellung zu bringen oder in einem Bereich einer Fahnenstellung zu halten.

In diesem Fall erhält die Steuerungseinrichtung, die insbesondere eine Betriebssteuerung der Windenergieanlage ist, Signale vom Windrichtungssensor und dem Rotorpositionssensor, um zu ermitteln, in welche Stillstandsposition die Windenergieanlage gefahren werden soll. Dafür ist die Steuerungseinrichtung der Windenergieanlage ausgebildet, das erfindungsgemäße, vorbeschriebene, Verfahren durchzuführen. Die Steuerungseinrichtung umfasst vorteilhafterweise eine Datenverarbeitungsanlage, die mittels einer Steuerungssoftware zur Steuerung des Betriebs der Windenergieanlage eingerichtet ist.

Vorzugsweise weist die Windenergieanlage ein aktives Windnachführungssystem auf, mittels dessen die Positionierung der Maschinengondel erfolgt.

Ebenfalls vorzugsweise weist die Windenergieanlage eine Bremseinrichtung und/oder eine Arretiereinrichtung auf, mittels der der Rotor wenigstens kurzzeitig nach Erreichen einer gewünschten Rotorposition festsetzbar ist.

Die Steuerungseinrichtung ist vorzugsweise ausgebildet, in Abhängigkeit von einem Rotorpositionssignal und einem Windrichtungssignal das Rotorblatt auszuwählen, das im Bereich einer Betriebsstellung positioniert wird. Dies ist insbesondere dann vorteilhaft, wenn die Windenergieanlage bereits im Wesentlichen aus dem Wind herausgedreht ist und langsam trudelt. In diesem Fall kann dasjenige Rotorblatt für die Betriebsstellung ausgesucht werden, das die in den Wind gerichtete horizontale Stellung als nächstes erreichen wird. Falls abzusehen ist, dass dieses Rotorblatt diese Position überdreht, kann das nächstfolgende Rotorblatt ausgewählt werden. Auf diese Weise ist eine besonders schnelle Erreichung der Stillstandsposition des Rotors erreicht.

Vorteilhafterweise ist die Steuerungseinrichtung ausgebildet, wenigstens einen Blattwinkel abhängig von einer gemessenen Rotorposition anzupassen. Ebenfalls ist die Steuerungseinrichtung vorzugsweise ausgebildet, nach Stabilisierung einer gewünschten Rotorposition die angepassten Blattwinkel beizubehalten.

Die zu den Erfindungsgegenständen, also dem erfindungsgemäßen Verfahren und der erfindungsgemäßen Windenergieanlage, genannten Merkmale, Vorteile und Eigenschaften gelten jeweils auch für den anderen Erfindungsgegenstand, da sich das erfindungsgemäße Verfahren und die erfindungsgemäße Windenergieanlage aufeinander beziehen und mittels der erfindungsgemäßen Windenergieanlage das erfindungsgemäße Verfahren ausführbar ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage mit einem Rotor und einem verstellbaren Rotorblatt,
- Fig. 2: eine schematische Darstellung einer Windenergieanlage in einer erfindungsgemäßen Stillstandsposition und
- Fig. 3: eine schematische Darstellung einer Windenergieanlage in einer weiteren erfindungsgemäßen Stillstandsposition.

In den Zeichnungen sind jeweils gleiche oder gleichartige Elemente und/oder Teile mit denselben Bezugsziffern versehen, so dass von einer erneuten Vorstellung jeweils abgesehen wird.

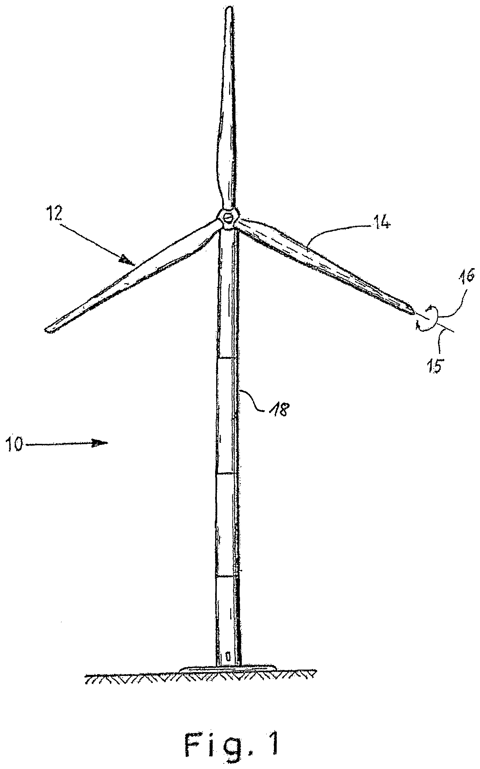

Fig. 1 zeigt schematisch eine beispielhafte Windenergieanlage 10 mit einem Rotor 12 und einem Rotorblatt 14 sowie zwei weitere Rotorblätter 14, wobei beispielsweise ein Rotorblatt 14 um seine Rotorblattlängsachse 15 entlang der Verstellrichtung 16 verstellt werden kann. Dies ist für wenigstens eins der beiden anderen Rotorblätter 14 in entsprechender Weise ebenfalls vorgesehen, vorzugsweise sind alle drei Rotorblätter 14 winkelverstellbar.

Die in Fig. 1 dargestellten Rotorblätter 14 sind jeweils in einer Betriebsstellung dargestellt, wobei beispielsweise bei dem vertikal nach oben gerichteten Rotorblatt 14 die Profilvorderkante die im Wesentlichen gerade Kante an der rechten Seite und die Profilhinterkante die stärker gekurvte Kante an der linken Seite ist. Die Profilsehnen, die die Profilvorderkante mit der Profilhinterkante verbinden, liegen in diesem Fall, insbesondere im Rotorblattspitzenbereich, in der Rotorebene bzw. im Wesentlichen in der Rotorebene. Bei einer Fahnenstellung würde der Querschnitt des Rotorblatts wesentlich schmaler erscheinen.

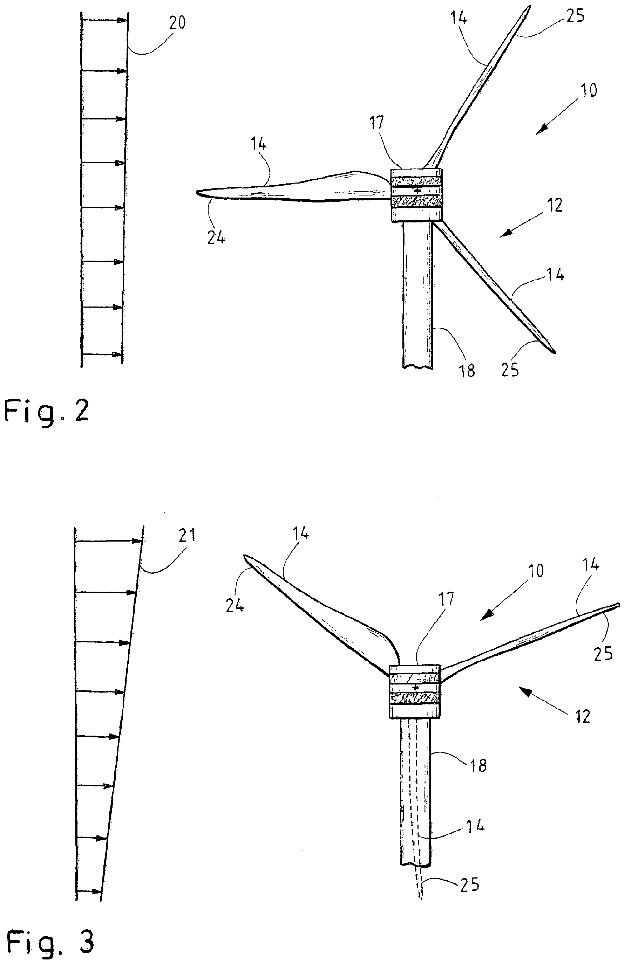

In Fig. 2 ist eine erste erfindungsgemäße Stillstandsposition des Rotors 12 dargestellt. Der Rotor 12 bzw. die Windenergieanlage 10 sind aus einer hinteren Ansicht dargestellt, d.h. die Maschinengondel 17 verdeckt die Rotornabe und die zentralen Bereiche der Rotorblätter 14.

In Fig. 2 ist ein Rotorblatt 14 in einer Betriebsstellung 24 dargestellt und zwei Rotorblätter 14 in jeweils einer Fahnenstellung 25 mit entsprechend verkleinertem Querschnittsprofil in der dargestellten Ansicht. Das Rotorblatt 14 in Betriebsstellung 24 befindet sich in einer im Wesentlichen horizontalen Position und wird von links von einem Wind angeströmt, dessen Windgradient 20 auf der linken Seite der Fig. 2 dargestellt ist. In diesem Fall ist an den verschiedenen vertikalen Positionen die Windgeschwindigkeit gleich, so dass über die gesamte Rotorhöhe der Rotor 12 gleichmäßig von der Seite angeströmt wird. In diesem Fall bietet das Rotorblatt 14 in Betriebsstellung 24 dem Wind wenig Angriffsfläche, während die beiden in Fahnenstellung 25 gestellten Rotorblätter 14 dem Wind eine deutlich größere Angriffsfläche bieten. Diese beiden in Fahnenstellung 25 gestellten Rotorblätter 14 werden daher vom Wind nach rechts weggedrückt, so dass sich der Rotor in der dargestellten Position stabilisiert.

In Fig. 3 ist eine Situation dargestellt, in der ein Windgradient 21 vorherrscht, bei dem in größerer Höhe eine stärkere Windgeschwindigkeit herrscht als in geringerer Höhe, so dass der obere Teil des Rotors eine größere seitliche Windanströmung erfährt als der untere Teil. In diesem Fall wird das obere der beiden in Fahnenstellung 25 gestellten Rotorblätter 14 stärker angeströmt als das untere und daher stärker in Richtung der Windströmung gedrückt. Dies führt zu einer Rotation des Rotors 12 aus der in Fig. 2 dargestellten Position heraus, im extremen Fall bis zu einer "Y"-Position, in der das untere in Fahnenstellung 25 gedrehte Rotorblatt 14 in eine senkrecht nach unten zeigende Position rotiert wird. In dieser Position ist es in Fig. 3 vom Turm 18 verdeckt und daher nur gestrichelt angedeutet. In dieser Position bietet das untere Rotorblatt 14 dem seitlich anströmenden Wind die größtmögliche Angriffsfläche, so dass ein Überschreiten dieser Position allenfalls bei extremen Windgradienten auftreten könnte, also bei Windverhältnissen, die für einen Helikopteranflug wenig geeignet sind.

Sowohl die in Fig. 2 als auch die in Fig. 3 dargestellte Rotorblattposition ist bei konstantem Wind und Windgradienten stabil und kann für einen Helikopteranflug verwendet werden. Falls dies vorgeschrieben ist oder anderweitig günstig ist, kann in dieser Position der Rotor 12 auch festgebremst und/oder arretiert werden, wobei aufgrund der aerodynamischen Stabilisierung das Festbremsen bzw. Arretieren sehr schonend erfolgt und den Triebstrang nicht beschädigt. In der einfachsten Ausführungsform der Erfindung werden die Rotorblätter in die Fahnenstellung verdreht, die Maschinengondel dreht um etwa 90° aus dem Wind und während oder nach dem Gondelverdrehen wird ein beliebiges Rotorblatt in die Betriebsstellung verfahren. Der Rotor wird sich nach einiger Zeit automatisch in einer Position stabilisieren.

Eine gewisse Regelung und Stabilisierung der aerodynamisch bereits stabilisierten Rotorpositionierung kann zu Beginn oder bei wechselndem Wind auch durch eine Winkelverstellung der Rotorblätter 14 erfolgen. So kann bei einem zu starken Windgradienten 21 gemäß Fig. 3 beispielsweise das obere der beiden in Fahnenstellung 25 positionierten Rotorblätter 14 etwas aus der Fahnenstellung herausgedreht werden, um dem Wind etwas weniger Angriffsfläche zu bieten. Der Rotor dreht sich dann wieder etwas in Richtung der in Fig. 2 gezeigten Positionierung zurück. Im Grundsatz bietet jedoch auch eine eingefrorene Rotorblattstellung der drei Rotorblätter 14 eine aerodynamisch stabilisierte Rotorblattpositionierung im Stillstand, die für einen Helikopteranflug geeignet ist.

Die Erfassung der Rotorposition erfolgt vorzugsweise über einen oder mehrere Drehzahlsensoren und/oder Rotorpositionssensoren. Gemäß einer besonders bevorzugten Ausführungsform der Erfindung ist vorgesehen, die Positionierung des Rotors mittels mit der Rotornabe drehfest verbundenen Beschleunigungssensoren zu erfassen.

Ebenfalls vorteilhafterweise wird mittels eines Rotorpositionssensors und einer Regeleinrichtung eine gewünschte Rotorposition mit einer Genauigkeit von bevorzugt ±10°, insbesondere bevorzugt von ±5°, eingehalten. Damit ist es möglich, einem anfliegenden Helikopter möglichst gleichbleibende Strömungsverhältnisse bereitzustellen.

In einer vorteilhaften Weiterbildung wird der Rotor festgebremst oder arretiert, wenn die Regeleinrichtung die gewünschte Rotorposition nicht mit der erforderlichen Genauigkeit, bevorzugt ±10°, insbesondere ±5°, einhält. Dies kann z.B. bei besonders turbulenten Windverhältnissen oder sehr ungünstigen Windgradienten der Fall sein. Bei letztgenannter Ausführung werden besonders bevorzugt Beschleunigungssensoren zur Rotorpositionserfassung eingesetzt, weil diese ein Auswandern des Rotors besonders schnell erkennen.

### Bezugszeichenliste

- 10: Windenergieanlage
- 11: Triebstrang
- 12: Rotor
- 13: Rotornabe
- 14: Rotorblatt
- 15: Rotorblattlängsachse
- 16: Verstellrichtung
- 17: Maschinengondel
- 18: Turm
- 20: Windgradient
- 21: Windgradient
- 24: Betriebsstellung
- 25: Fahnenstellung

## Patentansprüche

1. Verfahren zum Betreiben einer Windenergieanlage (10) mit einer drehbar auf einem Turm (18) angeordneten Maschinengondel (17) und einem Rotor (12) mit drei Rotorblättern (14), von denen wenigstens zwei um eine Rotorblattlängsachse (15) schwenkbar sind, wobei die Windenergieanlage (10) nach einem Stillsetzungsbefehl in eine Stillstandsposition gebracht wird, **dadurch gekennzeichnet, dass** zum Erreichen der Stillstandsposition die Maschinengondel (17) in eine Azimutposition quer zur Windrichtung gedreht wird, ein Rotorblatt (14) in einen Bereich einer Betriebsstellung (24) gebracht oder in einem Bereich einer Betriebsstellung (24) gehalten wird, die insbesondere im Wesentlichen einer Blattwinkeleinstellung in einem Teillastbereich unterhalb eines Volllastbereiches der Windenergieanlage (10) entspricht, und zwei andere Rotorblätter (14) jeweils in einen Bereich einer Fahnenstellung (25) gebracht oder in einem Bereich einer Fahnenstellung (25) gehalten werden, wobei der Rotor (12) nach Erreichen der Stillstandsposition durch den quer zur Rotorachsrichtung anströmenden Wind stabilisiert wird.

2. Verfahren nach Anspruch 1, **dadurch gekennzeichnet, dass** der Bereich einer Betriebsstellung (24) ein Bereich ist, bei dem Profilsehnen der äußeren 30% der Blattlänge des Rotorblatts (14) im Wesentlichen, insbesondere innerhalb von etwa ±10°, in der Rotorebene liegen, wobei der Bereich der Fahnenstellung (25) ein Bereich ist, bei dem Profilsehnen der äußeren 30% der Blattlänge des Rotorblatts (14) im Wesentlichen, insbesondere innerhalb von etwa ±15°, senkrecht zur Rotorebene liegen.

3. Verfahren nach Anspruch 1 oder 2, **dadurch gekennzeichnet, dass** der Rotor (12) nach Erreichen der Stillstandsposition für eine Zeitdauer, insbesondere die Dauer eines Helikopteranflugs, zusätzlich festgebremst und/oder arretiert wird.

4. Verfahren nach einem der Ansprüche 1 bis 3, **dadurch gekennzeichnet, dass** eine Anpassung wenigstens eines Blattwinkels abhängig von einer gemessenen Rotorposition erfolgt, wobei insbesondere die Anpassung nicht kontinuierlich erfolgt und nach Stabilisierung einer gewünschten Rotorposition die eingestellten angepassten Blattwinkel beibehalten werden.

5. Verfahren nach einem der Ansprüche 1 bis 4, **dadurch gekennzeichnet, dass** die Maschinengondel (17) in eine vorbestimmte Drehrichtung verfahren wird, wobei insbesondere im Falle des Vorliegens eines Kabel-Twist-Signals in die zur vorbestimmten Richtung entgegengesetzte Richtung verfahren wird.

6. Verfahren nach einem der Ansprüche 1 bis 5, **dadurch gekennzeichnet, dass** zunächst die Drehung der Maschinengondel (17) erfolgt und die Änderung der Blattwinkel erst erfolgt, wenn die Maschinengondel (17) bereits im Wesentlichen, insbesondere um mehr als 60°, aus dem Wind gedreht ist.

7. Verfahren nach einem der Ansprüche 1 bis 6, **dadurch gekennzeichnet, dass** eine Stillstandsposition des Rotors (12) eingestellt wird, bei der eine Rotorposition vorherrscht, die im Wesentlichen zwischen einer "Y"-Position mit einem senkrecht nach unten weisenden Rotorblatt (14) und einer demgegenüber gedrehten Position liegt, bei der das im Bereich einer Betriebsstellung (24) gedrehte Rotorblatt (14) waagerecht und zum Wind weisend ausgerichtet ist, wobei die eingenommene Rotorposition mit einer Abweichung von weniger als ±10°, insbesondere von weniger als ±5° eingehalten wird.

8. Windenergieanlage (10) mit einer drehbar auf einem Turm (18) angeordneten Maschinengondel (17), einem Rotor (12) mit drei Rotorblättern (14), von denen wenigstens zwei um eine Rotorblattlängsachse (15) schwenkbar sind, einer Steuerungseinrichtung, einem Windrichtungssensor und einem Rotorpositionssensor, wobei die Steuerungseinrichtung ausgebildet ist, die Windenergieanlage (10) nach einem Stillsetzungsbefehl in eine Stillstandsposition zu bringen, **dadurch gekennzeichnet, dass** die Steuerungseinrichtung nach Empfang des Stillsetzungsbefehls ausgebildet ist, die Maschinengondel (17) in eine Azimutposition quer zur Windrichtung zu drehen, ein Rotorblatt (14) in einen Bereich einer Betriebsstellung (24) zu bringen oder in einem Bereich einer Betriebsstellung (24) zu halten und zwei andere Rotorblätter (14) jeweils in einen Bereich einer Fahnenstellung (25) zu bringen oder in einem Bereich einer Fahnenstellung (25) zu halten.

9. Windenergieanlage (10) nach Anspruch 8, **dadurch gekennzeichnet, dass** die Windenergieanlage (10) ein aktives Windnachführungssystem aufweist, mittels dessen die Positionierung der Maschinengondel (17) erfolgt.

10. Windenergieanlage (10) nach Anspruch 8 oder 9, **dadurch gekennzeichnet, dass** die Windenergieanlage (10) eine Bremseinrichtung und/oder eine Arretiereinrichtung aufweist, mittels der der Rotor (12) wenigstens kurzzeitig nach Erreichen einer gewünschten Rotorposition festsetzbar ist.

11. Windenergieanlage (10) nach einem der Ansprüche 8 bis 10, **dadurch gekennzeichnet, dass** die Steuerungseinrichtung ausgebildet ist, in Abhängigkeit von einem Rotorpositionssignal und einem Windrichtungssignal das Rotorblatt (14) auszuwählen, das im Bereich einer Betriebsstellung (24) positioniert wird.

12. Windenergieanlage (10) nach einem der Ansprüche 8 bis 11, **dadurch gekennzeichnet, dass** die Steuerungseinrichtung ausgebildet ist, wenigstens einen Blattwinkel abhängig von einer gemessenen Rotorposition anzupassen.

13. Windenergieanlage (10) nach Anspruch 12, **dadurch gekennzeichnet, dass** die Steuerungseinrichtung ausgebildet ist, nach Stabilisierung einer gewünschten Rotorposition die angepassten Blattwinkel beizubehalten.

## Claims

1. Method for operating a wind turbine (10) with a nacelle (17) arranged rotatably on a tower (18) and a rotor (12) with three rotor blades (14), of which at least two are rotatable on a longitudinal rotor blade axis (15), wherein the wind turbine (10) is brought into a maintaining position after a shutdown command, **characterized in that** the nacelle (17) is rotated to an azimuth position across the wind direction for reaching the maintaining position, that a rotor blade (14) is brought into a region of an operational position (24) or is held in a region of an operational position (24), which in particular essentially corresponds to a blade angle adjustment in a partial-load range below a full load range of the wind turbine (10), and that each of two other rotor blades (14) are brought into a region of a vane position (25) or are held in a region of a vane position (25), wherein the rotor (12) is stabilized by wind, which flows in a cross axial rotor blade direction, after reaching the maintaining position.

2. Method according to claim 1, **characterized in that** the region of an operational position (24) is a region, in which the profile chords of the outer 30% of the blade length of the rotor blade (14) are located essentially, in particular within approximately ±10°, in the rotor plane, wherein the region of the vane position (25) is a region, in which the chords of the outer 30% of the blade length of the rotor blade (14) are located essentially, in particular within approximately ±15°, vertically to the rotor plane.

3. Method according to claim 1 or 2, **characterized in that** the rotor (12) is additionally braked and/or locked for a time duration, in particular for the duration of a helicopter approach, after reaching the maintaining position.

4. Method according to one of the claims 1 to 3, **characterized in that** an adjustment of at least one blade angle depends on a measured rotor position, wherein in particular the adjustment is discontinuous and the adjusted adapted blade angles are maintained after stabilizing of a desired rotor position.

5. Method according to one of the claims 1 to 4, **characterized in that** the nacelle (17) is moved into a predetermined direction of rotation, wherein in particular it is moved into the direction contrary to the predetermined direction in case of the presence of a cable-twist-signal.

6. Method according to one of the claims 1 to 5, **characterized in that** initially the rotation of the nacelle (17) takes place and that the modification of the blade angle is made only if the nacelle (17) is turned already essentially out of the wind, in particular by more than 60°.

7. Method according to one of the claims 1 to 6, **characterized in that** a maintaining positon of the rotor (12) is adjusted, in which a rotor position prevails, which is located essentially between a "Y"-position with a rotor blade (14) directing vertical downward and a rotated position compared thereto, in which the rotor blade (14), which is rotated in the region of a maintaining position (24), is adjusted horizontally and pointing to the wind, wherein the occupied rotor position is complied with a deviation of less than ±10°, in particular of less than ±5°.

8. Wind turbine (10) with a nacelle (17) arranged rotatably on a tower (18) and a rotor (12) with three rotor blades (14), of which at least two are rotatable on a longitudinal rotor blade axis, a control device, a wind direction sensor and a rotor position sensor, wherein the control device is configured to bring the wind turbine (10) into a maintaining position after a shutdown command, **characterized in that** after receiving the shutdown command the control device is configured to rotate the nacelle (17) to an azimuth position across the wind direction, to bring a rotor blade (14) in a region of an operational position (24) or to held it in a region of an operational position (24) and to bring each of two other rotor blades (14) in a region of a vane position (25) or to held each of the two other rotor blades (14) in a region of a vane position (25).

9. Wind turbine (10) according to claim 8, **characterized in that** the wind turbine (10) comprises an active yaw control system to position the nacelle (17).

10. Wind turbine (10) according to claim 8 or 9, **characterized in that** the wind turbine (10) comprises a braking device and/or a lock-off device, with which the rotor (12) is lockable at least temporarily after reaching a desired rotor position.

11. Wind turbine (10) according to one of the claims 8 to 10, **characterized in that** the control device is configured to choose the rotor blade (14), which is positioned in a region of an operational position (24), depending on a rotor position signal and a wind direction signal.

12. Wind turbine (10) according to one of the claims 8 to 11, **characterized in that** the control device is configured to adapt at least one blade angle depending on a measured rotor position.

13. Wind turbine (10) according to claim 12, **characterized in that** the control device is configured to maintain the adapted blade angle after stabilizing a desired rotor position.

## Revendications

1. Procédé de fonctionnement d'une éolienne (10) comprenant une nacelle (17) disposée sur un mât (18) de manière à pouvoir tourner et un rotor (12) comprenant trois pales (14), dont au moins deux peuvent pivoter autour d'un axe longitudinal (15) de pale de rotor, l'éolienne (10) étant placée en position d'arrêt après une instruction d'arrêt, **caractérisé en ce que**, pour atteindre la position d'arrêt, la nacelle (17) est tournée dans une position azimutale transversalement à la direction du vent, une pale de rotor (14) est placée dans une zone d'une position de service (24) ou maintenue dans une zone d'une position de service (24) qui correspond en particulier essentiellement à un réglage de l'angle de pale dans une zone de charge partielle au-dessous d'une zone de pleine charge de l'éolienne (10), et deux autres pales de rotor (14) étant placées chacune dans une zone d'une position en drapeau (25) ou bien maintenues dans une zone d'une position en drapeau (25), le rotor (12) étant stabilisé par le vent arrivant transversalement au sens de l'axe de rotor après l'atteinte de la position d'arrêt.

2. Procédé selon la revendication 1, **caractérisé en ce que** la zone d'une position de service (24) est une zone dans laquelle les cordes des 30 % extérieurs de la longueur de la pale de rotor (14) se situent pour l'essentiel en particulier dans les limites de ± 10° environ, sur le plan du rotor, la zone de la position en drapeau (25) étant une zone dans laquelle des cordes des 30 % extérieurs de la longueur de la pale de rotor (14) se situent pour l'essentiel, en particulier dans les limites de ± 15° environ, perpendiculairement au plan du rotor.

3. Procédé selon la revendication 1 ou la revendication 2, **caractérisé en ce que** le rotor (12) a été en plus bloqué et/ou arrêté après l'atteinte d'une position d'arrêt pour une certaine durée, en particulier pour la durée de l'approche d'un hélicoptère.

4. Procédé selon l'une quelconque des revendications 1 à 3, **caractérisé en ce que** l'adaptation d'au moins un angle de pale est réalisée en fonction d'une position mesurée du rotor, l'adaptation en particulier n'étant pas réalisée en continu et les angles de pale adaptés étant conservés après la stabilisation d'une position souhaitée du rotor.

5. Procédé selon l'une quelconque des revendications 1 à 4, **caractérisé en ce que** la nacelle (17) est déplacée dans un sens de rotation prédéfini, en particulier déplacé dans le sens opposé au sens prédéfini si un signal de torsion du câble est émis.

6. Procédé selon l'une quelconque des revendications 1 à 5, **caractérisé en ce que** la rotation de la nacelle (17) est effectuée la première et la modification de l'angle de pale n'est réalisée que lorsque la nacelle (17) a déjà été tournée essentiellement dans la direction opposée au vent, en particulier de plus de 60°.

7. Procédé selon l'une quelconque des revendications 1 à 6, **caractérisé en ce qu'**on règle une position d'arrêt du rotor (12) dans laquelle prédomine une position du rotor se trouvant essentiellement entre une position "Y" avec une pale de rotor (14) dirigée verticalement vers le bas et une position tournée en face, dans laquelle la pale de rotor (14) tournée dans la zone d'une position de service (24) est orientée horizontalement et en direction du vent, la position de rotor occupée étant maintenue avec un écart inférieur à ± 10°, en particulier inférieur à ± 5°.

8. Eolienne (10) comprenant une nacelle (17) disposée sur un mât (18) de manière à pouvoir tourner et un rotor (12) comprenant trois pales (14), dont au moins deux peuvent pivoter autour d'un axe longitudinal (15) de pale de rotor, un dispositif de commande, une girouette et un capteur de la position du rotor, le dispositif de commande étant conçu pour amener l'éolienne (10) dans une position d'arrêt après une instruction d'arrêt, **caractérisée en ce que** le dispositif de commande est conçu pour, après la réception de l'instruction d'arrêt, faire tourner la gondole (17) dans une position azimutale transversalement au sens du vent, à amener une pale de rotor (14) dans une zone d'une position de service (24) ou de la maintenir dans une zone d'une position de service (24) et à amener deux autres pales de rotor (14) respectivement dans une zone d'une position en drapeau (25) ou de la maintenir dans une zone d'une position en drapeau (25).

9. Eolienne (10) selon la revendication 8, **caractérisée en ce qu'**elle (10) présente un dispositif de maintien dans la direction du vent actif au moyen duquel la nacelle est positionnée (17).

10. Eolienne (10) selon la revendication 8 ou la revendication 9, **caractérisée en ce qu'**elle (10) présente un dispositif de freinage et/ou un dispositif d'arrêt au moyen duquel le rotor (12) peut être immobilisé, au moins pour un court laps de temps, après l'atteinte de la position souhaitée du rotor.

11. Eolienne (10) selon l'une quelconque des revendications 8 à 10, **caractérisée en ce que** le dispositif de commande est conçu pour sélectionner, en fonction d'un signal de position du rotor et d'un signal de direction du vent, la pale de rotor (14) qui est positionnée dans la zone d'une position de service (24).

12. Eolienne (10) selon l'une quelconque des revendications 8 à 11, **caractérisée en ce que** le dispositif de commande est conçu pour adapter au moins un angle de pale en fonction d'une position de rotor mesurée.

13. Eolienne (10) selon la revendication 12, **caractérisée en ce que** le dispositif de commande est conçu pour maintenir l'angle de pale adapté après la stabilisation d'une position de rotor souhaitée.
